# NEUE EUROPÄISCHE PATENTSCHRIFT

(11) **EP 1 880 796 B2**
(45) Veröffentlichungstag und Bekanntmachung des Hinweises auf die Entscheidung über den Einspruch: **02.11.2011**
(45) Hinweis auf die Patenterteilung: 25.02.2009
(21) Anmeldenummer: 07013655.1
(22) Anmeldetag: 12.07.2007
(51) Int. Cl.: B23Q 1/54

(54) **Mehrachsendrehkopf für eine Werkzeugmaschine**
Multi-axis pivot head for a machine tool
Tête rotative à axes multiples pour machine-outil

(30) Priorität: 18.07.2006 DE 102006033600
(43) Veröffentlichungstag der Anmeldung: 23.01.2008
(73) Patentinhaber: Franz Kessler GmbH, 88422 Bad Buchau (DE)
(72) Erfinder: Hoss, Dietmar, 89597 Munderkingen (DE); Rondé, Uwe, Dr., 88422 Bad Buchau (DE)
(74) Vertreter: Otten, Roth, Dobler & Partner

(56) Entgegenhaltungen:
- EP-A1- 1 870 199
- EP-A2- 0 712 682
- EP-B1- 0 885 081
- WO-A-02/26438
- WO-A2-02/26438
- JP-A- 1 222 809
- JP-A- 63 295 143
- PATENT ABSTRACTS OF JAPAN & JP 63 295143 A 01 Dezember 1988

## Beschreibung

Die Erfindung betrifft einen Mehrachsendrehkopf für eine Werkzeugmaschine nach dem Oberbegriff des Anspruchs 1. (JP-A-63 295 143)

### Stand der Technik

Ein Mehrachsendrehkopf, bei dem eine Motorspindel um zwei Achsen drehbar in einer Gabel angeordnet ist, ist beispielsweise aus der Druckschrift EP 0 885 081 B1 bekannt.

Bei einem bekannten Mehrachsendrehkopf wird die Motorspindel zwischen zwei Gabelarmen angeordnet, in denen zwei Antriebsmotoren beidseitig der Motorspindel für deren Drehbewegung angeordnet sind. Für die Unterbringung der Antriebsmotoren, die als Torquemotoren für einen Direktantrieb ausgelegt sind, sind in der bekannten Ausführung zylindrische Hohlräume in den Gabelarmen vorgesehen, so dass der zylindrische Stator unmittelbar im zylindrischen Hohlgehäuse eines Gabelarms fixiert werden kann. Die Gabelarme sind durch die geschlossene, zylindrische Wandung des Hohlraums sehr massiv und entsprechend schwer ausgeführt. Etwaige Zusatzeinheiten, z.B. eine Kühleinheit für den Stator, müssen dabei in diese zylindrische Hohlform mitintegriert werden.

Dabei bildet die Außenwand des Hohlraums in bekannten Mehrachsendrehköpfen die Außenwand des Stators bzw. einer zugehörigen Kühleinrichtung und muss daher bei der Montage des Stators im Gabelarm auch entsprechend abgedichtet werden. Hieraus resultiert die Gefahr einer mangelhaften Abdichtung.

Im Wartungs- bzw. Reparaturfall ist ein in einem solchen zylindrischen Hohlraum montierter Motor nur in Einzelteilen und damit mit großem Aufwand demontierbar.

Die Anschlüsse für den Motor sowie für etwaige Zusatzkomponenten z.B. für ein Kühlmedium können dabei nur in axialer Richtung an der Stirnseite der zylindrischen Hohlform erfolgen.

Aufgabe der Erfindung ist es, einen Mehrachsendrehkopf vorzuschlagen, bei dem die Montage und/oder Demontage, der Statoreinheit erleichtert ist.

Diese Aufgabe wird ausgehend von einem Mehrachsendrehkopf gemäß dem Oberbegriff des Anspruchs 1 durch dessen kennzeichnende Merkmale gelöst.

Durch die in den Unteransprüchen genannten Maßnahmen sind vorteilhafte Ausführungen und Weiterbildungen der Erfindung möglich.

Dementsprechend zeichnet sich ein erfindungsgemäßer Mehrachsendrehkopf dadurch aus, dass wenigstens eine von einem Gabelarm separate seitlich auf den Gabelarm montierbare Statoreinheit vorgesehen ist.

Bei einem Mehrachsendrehkopf gemäß der Erfindung ist die Montage bzw. Demontage der Statoreinheit der Antriebsmotoren für die Drehbewegung der Motorspindel zwischen den Gabelarmen denkbar einfach. Die Statoreinheit kann fertig vormontiert auf den jeweiligen Gabelarm aufgesetzt und dort befestigt, beispielsweise verschraubt werden. Entsprechend einfach gestaltet sich auch der Austausch einer Statoreinheit und entsprechende Reparatureinheiten.

Bei einem Mehrachsendrehkopf gemäß der Erfindung ist auch die Montage des Rotors erleichtert, da dieser bei demontierter Statoreinheit seitlich über den Gabelarm hervorsteht. Der Rotor ist in diesem Montagestadium von allen Seiten zugänglich und kann dadurch leichter montiert bzw. demontiert werden.

Darüber hinaus kann für einen erfindungsgemäßen Mehrachsendrehkopf die Statoreinheit mit allen vorgesehenen Komponenten, beispielsweise einer Kühleinheit sowie den verschiedenen, erforderlichen elektrischen oder fluidführenden Anschlüssen vormontiert und anschließend an dem Gabelarm befestigt werden.

Dadurch, dass die Statoreinheit als vormontierbare Einheit vorgesehen wird, kann die Gabel ohne Motorgehäuse und somit erheblich einfacher gestaltet werden. Durch die seitliche Anordnung ist die Statoreinheit von allen Außenseiten her gut zugänglich, so dass problemlos Anschlüsse oder Zusatzkomponenten an unterschiedlichsten Positionen untergebracht werden können. Derartige Zusatzkomponten können beispielsweise Sensoren, insbesondere Temperaturfühler, winkelmesser oder dergleichen sein.

Der Gesamtaufbau eines solchen Mehrachsendrehkopf ist durch die erfindungsgemäße, leichtere und kompakte Gabelbauweise insgesamt kompakter und leichter zu gestalten.

Darüber hinaus ist im Wartungs- oder Reparaturfall die Statoreinheit als Ganzes vom Gabelarm demontierbar, wodurch die Handhabung und damit der Montageaufwand erheblich vereinfacht wird.

In einer vorteilhaften Wetterführung der Erfindung wird die Statoreinheit mit einem vom Gabelarm separat ausgebildeten Gehäuse versehen. Ein solches Gehäuse kann vormontiert staubund fluiddicht ausgeführt und bereits außerhalb des Gabelarms geprüft werden. Darüber hinaus können die Durchführungen für die Anschlüsse entsprechend staub- und fluiddicht im Gehäuse der vormontierten Statoreinheit vorgesehen und geprüft werden.

Auch die Flexibilität bei Verwendung unterschiedlicher Motortypen oder unterschiedlicher Zusatzkomponenten wird bei einer erfindungsgemäßen Ausführung eines Mehrachsendrehkopfs verbessert, da ohne weiteres auch unterschiedlich dimensionierte Statoreinheiten in den Gabelarm einsetzbar sind.

Dabei sind lediglich die Fixierungselemente der Statoreinheit an die entsprechenden Fixierelemente im Gabelarm anzupassen. Gegebenenfalls können im Gabelarm auch unterschiedlich angeordnete oder unterschiedlich ausgebildete Fixierelemente für unterschiedliche Statoreinheiten vorgesehen werden.

Um die Statoreinheit zuverlässig im Gabelarm zu fixieren wird vorteilhafterweise ein Verbindungsflansch an der Statoreinheit vorgesehen. Mit Hilfe eines solchen Verbindungsflansches kann die Statoreinheit lösbar am Gabelarm befestigt, beispielsweise verschraubt werden.

Vorteilhafterweise umfasst die Statoreinheit wenigstens ein Kühlelement. Ein solches Kühlelement kann bei der erfindungsgemäßen Ausgestaltung wie bereits oben angedeutet in der fertig vormontierten Statoreinheit eingebaut sein. Die Kühleinheit kann dazu dienen, den Antriebsmotor oder weitere in der Statoreinheit untergebrachte Komponenten zu kühlen.

Vorteilhafterweise ist ein umfangsseitiger Blechmantel für die Kühlung bei der Statoreinheit vorgesehen. Dadurch ist es möglich, die Kühleinheit außen am Statorgehäuse, beispielsweise am Umfang des Statorgehäuses anzubringen, wobei die Kühleinheit durch den Blechmantel abgedeckt wird. Darüber hinaus kann in einer Weiterbildung dieser Ausführungform der Blechmantel Bestandteil der Kühleinheit sein. So ist in einer besonderen Ausführungsform der Blechmantel zugleich die Außenwandung der Kühleinheit. Der Blechmantel kann hierzu auch als Abdeckung einer Kühlkammer oder von Kühlkanälen, beispielsweise zur Abdeckung von Außennuten in einem Statorgehäuse herangezogen werden. In dieser Ausführungsform kann der Anschluss der Kühleinheit zur Zuführung eines Kühlmediums auf einfache Weise beispielsweise durch eine Durchführung durch den Blechmantel bewerkstelligt werden.

Vorteilhafterweise wird die Statoreinheit mit Mitteln zur zentrischen Fixierung im Bezug zur zweiten Achse versehen. Derartige Fixiermittel können beispielsweise durch Passstifte oder dergleichen gebildet werden. Die Fixiermittel können darüber hinaus auch als Führungsmittel während des Aufsetzens der Statoreinheit ausgebildet sein.

In einer besonderen Ausführungsform der Erfindung wird die Stirnseite des Statorgehäuses mit einer Profilierung, beispielsweise mit einer Ringschulter versehen, die an eine entsprechende Ringschulter im Gabelarm anfügbar ist. Auf diese Weise wird die zentrale Position durch die beiden korrespondierenden Ringschultern festgelegt.

Auch andere Formen der Anschlagbildung zur zentrierten Montage der Statoreinheit sind jedoch denkbar.

Die Fixierungsmittel können darüber hinaus einen Verbindungsflansch umfassen, der gegebenenfalls in Verbindung mit vorgenannten Anschlägen ebenfalls in eine entsprechender Vertiefung im Gabelarm einfügbar ist. Auch hierdurch kann die zentrische Position der Statoreinheit gewährleistet werden. Darüber hinaus, kann an dem Verbindungsflansch die Befestigung am Gabelarm vorgenommen werden, beispielsweise können im Verbindungsflansch Bohrungen für die Aufnahme von Verbindungsschrauben oder dergleichen Befestigungselemente vorgesehen sein.

Der Antriebsmotor, der am Gabelarm befestigt wird, wird bevorzugt als Innenläufermotor ausgebildet, so dass die Lagerung des Rotors unabhängig von der separat montierbaren Statoreinheit am Gabelarm erfolgen kann. Der Gabelärm oder ein entsprechendes, am Gabelarm befestigtes Tragelement erstreckt sich dabei vorteilhafter Weise auf der inneren Stirnseite der Statoreinheit über die Drehachse hinaus, so dass daran die Lagerung des Rotors erfolgen kann. Dadurch ist eine Bauform möglich, bei der die Statoreinheit unabhängig vom Rotor und dessen Lagerung seitlich von außen auf den Gabelarm montiert oder von diesem demontiert werden kann.

Vorteilhafterweise umfasst der Gabelarm des Mehrachsendrehkopfs einen Durchlass für eine Rotorachse. In diesen Durchlass kann bei der Montage des Mehrachsendrehkopfs das entsprechende, die Rotorachse oder Rotorwelle darstellende Bauteil entweder von außen oder von innen eingesetzt werden. Der Durchlass kann dabei eine oder mehrere Abstufungen aufweisen, die bevorzugt ringförmig angelegt werden. Durch eine korrespondierende Formgebung des die Rotorachse bildenden Bauelementes wird hierdurch wiederum eine zentrierte Einbaulage vorgegeben. Darüber hinaus kann an einer oder mehreren Abstufungen ein Lager für die Rotorachse angelegt werden, so dass durch die Formgebung des Durchlasses auch die Position des Rotorlagers definiert wird.

Vorteilhafterweise wird ein erfindungsgemäßer Mehrachsendrehkopf spiegelsymmetrisch aufgebaut, d.h. es werden zwei Antriebsmotoren auf beiden Seiten der Spindeln an jeweils einem Gabelarm vorgesehen. Hierdurch ergibt sich eine gleichmaßig beidseits wirkende Kraftverteilung auf die Gabel des Mehrachsendrehkopfs sowohl bezüglich der durch die beiden Antriebsmotoren erzeugten Kräfte als auch hinsichtlich der beim Einsatz der Spindel und entsprechenden Vorschubbewegungen durch Bearbeitung des zugehörigen Werkstücks auftretenden Kräfte.

Vorteilhafterweise wird darüber hinaus eine Klemm- und/oder Bremseinheit vorgesehen, um die Motorspindel in den verschiedenen Winkelpositionen, die durch den Antriebsmotor eingestellt werden können, mechanisch mit der Gabel des Mehrachsendrehkopfs zu verspannen. Dies ist insbesondere dann von Vorteil, wenn mit hohen Krafteinwirkungen bei der Bearbeitung des Werkstücks gerechnet werden muss. Bei einem mechanischen Einspannen oder Verklemmen des Mehrachsendrehkopfs können diese Kräfte sodann unmittelbar in die Gabel übergeleitet werden, ohne dass hierzu die Antriebsmotoren zur Erzeugung eines entsprechenden Haltemoments mit Strom beaufschlagt werden müssen.

Ein Ausführungsbeispiel der Erfindung ist in der Zeichnung dargestellt und wird anhand der Figuren nachfolgend näher erläutert.

Im Einzelnen zeigen
- Figur 1: eine Seitenansicht auf eine Gabel eines erfindungsgemäßen Mehrachskopfes und
- Figur 2: einen Schnitt entlang Schnittlinie II in Figur 1 der dort dargestellten Gabel.

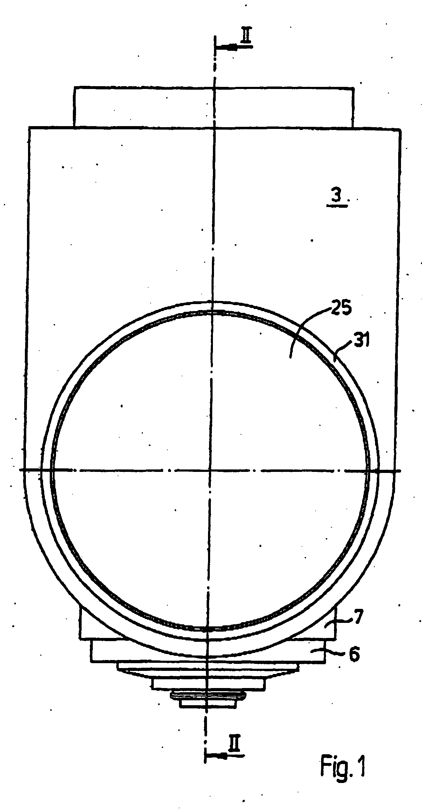

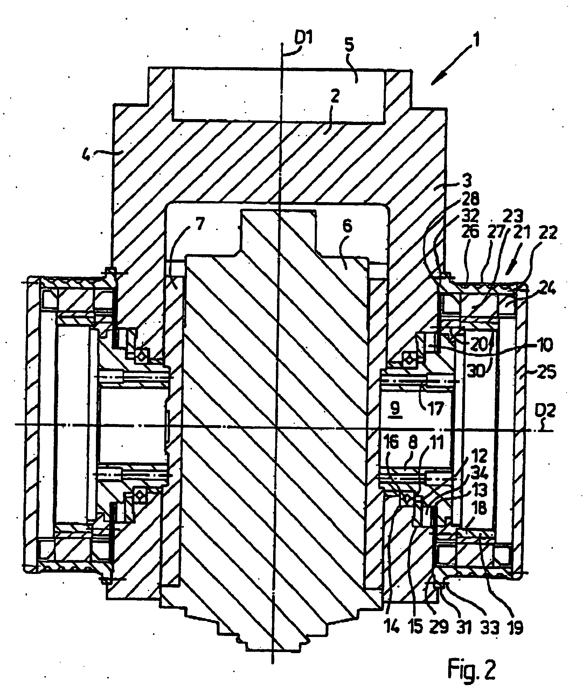

Die Gabel 1...gemäß den Figuren 1 und 2 umfasst einen Quersteg 2 sowie zwei Gabelarme 3, 4. Im Quersteg 2 ist eine axiale Muffe 5 zur Befestigung der Gabel 1 an einem vorzugsweise um die Achse D1 drehbaren Tragarm (nicht dargestellt) vorgesehen. In einer anderen Ausführungsvariante des Mehrachsendrehkopfs kann auch der Tragarm fest und die Verbindung zwischen der Gabel 1 und dem nicht dargestellten Tragarm drehbar ausgeführt sein.

Zwischen dem Gabelarm 3, 4 ist eine Motorspindel 6 in einer Spindelaufnahme 7 angeordnet. Die Motorspindel 6 kann dabei in herkömmlicher Weise, beispielsweise stirnseitig in der Spindelaufnahme 7 fixiert sein. Die Spindelaufnahme 7 kann rohrförmig, beispielsweise als vierkantrohr ausgestaltet sein.

Die Motorspindel 6 ist schwenkbar um die zweite Drehachse D2 angeordnet. Durch Drehungen um die beiden Drehachsen D1 und D2 kann ein nicht näher dargestelltes, an der Motorspindel 6 befestigtes Werkzeug an nahezu beliebigen, insbesondere auch gekrümmten Oberflächen gesteuert vorbeigeführt werden. Für das Arbeiten unter hoher mechanischer Belastung, insbesondere bei großem Materialabtrag kann dabei zusätzlich ein nicht näher dargestelltes Spann- bzw. Bremssystem vorgesehen werden, um die Motorspindel in einer bestimmten Position mechanisch zu verspannen. Die Ansteuerung eines solchen Spann- bzw. Bremssystems kann beispielsweise hydraulisch, elektrisch oder auf andere Weise erfolgen.

Die spindelaufnahme 7 zwischen den Gabelarmen 3, 4 ist beidseits mit jeweils einem, die Rotorwelle bildenden Rotorträger 8 befestigt. Der Rotorträger 8 ist mit einem inneren Durchlass 9 versehen, durch den eine elektrische und/oder medienführende Leitungsführung zur Motorspindel 6 realisierbar ist. Der Rotorträger 8 ist in einen Durchlass 10 des zugehörigen Gabelarms 3 eingesetzt. Sowohl der Rotorträger 8 als auch der Durchlass 10 sind mit verschiedenen Abstufungen 11, 12, 13 bzw. 14, 15 versehen, durch die die zentrierte Einbaulage vorgegeben wird. Durch diese Abstufung wird darüber hinaus auch die axiale Position gegenüber der Drehachse D2 des Rotorträgers im Gabelarm 3 vorgegeben.

An der Abstufung 14 ist ein Lager 16 für den Rotorträger 8 angefügt, mittels dem der Rotorträger 8 drehbar im Durchlass 10 des Gabelarms 3 gelagert ist.

In der dargestellten Variante des Antriebs zur Drehung der Motorspindel 6 um die Drehachse D2 als Innenläufermotor kann sich demnach der Gabelarm 3 oder in einer anderen Ausführung ein innen am Gabelarm befestigtes Tragelement soweit über die Drehachse D2 hinaus am Stator vorbei erstrecken, dass der Rotor unmittelbar am Gabelarm bzw. an dem zugehörigen Tragelement gelagert werden kann.

Durchgangsbohrungen 17 im Rotorträger 8 ermöglichen die Verbindung mit der Spindelaufnahme 7, beispielsweise durch Verschrauben.

Ein Rotorring 18 mit Permanentmagnet 19 ist am Rotorträger 8 angeschraubt. Wie in Figur 2 erkennbar ist, befindet sich der Rotorring 18 außerhalb des Gabelarms 3. Er kann, beispielsweise über die Bohrungen 20 mit dem Rotorträger 8 verschraubt werden.

Eine erfindungsgemäße Statoreinheit 21 ist seitlich von außen an den Gabelarm 3 montiert. Die Statoreinheit 21 umfasst ein Statorgehäuse 22, in dem ein Statorblechpaket 23 sowie die zugehörigen Magnetspulen 24 angeordnet sind. Stirnseitig ist die Statoreinheit 21 durch einen Abdeckflansch 25 verschlossen, der beispielsweise an dem Statorgehäuse 22 verschraubbar ist.

An der Außenseite des Statorgehäuses 22 sind rillenförmige Ringnuten 26 angebracht, die durch ein Abdeckblech 27 abgedeckt sind. Das Abdeckblech 27 bildet eine Kühlkammer um das Statorgehäuse 22. Die Nuten 26 bilden Kühlkanäle bzw. Kühlrippen für die Kühlung der Statoreinheit 21.

Durch die außen liegende Anordnung der Statoreinheit 21 ist diese von allen Seiten her zugänglich. Dies ermöglicht eine problemlose Montage bzw. Demontage und darüber hinaus einen ebenso einfachen Anschluss für elektrische Leitungen und/oder Medienleitungen an nahezu beliebiger Stelle. Das Kühlmedium kann beispielsweise durch eine einfache Durchführung im Blechmantel 27 zu und wieder abgeführt werden.

Im dargestellten Ausführungsbeispiel.ist das Statorgehäuse auf der Seite des Gabelarms 3 mit einer Ringschulter 28 versehen, die mit einer korrespondierenden Ringschulter eines Ringanschlags 29 des Gabelarms 3 wechselwirkt. Hierdurch ist eine zentrierte Position der Statoreinheit 21 am Gabelarm 3 im Bezug auf die Drehachse 2 bzw. im Bezug auf den durch den Rotorring 18 und die Permanentmagneten 19 gebildeten Rotor 30 möglich.

weiterhin ist ein Befestigungsflansch 31 am Statorgehäuse 22 vorgesehen, mittels dem die Statoreinheit 22 am Gabelarm 3 befestigbar, beispielsweise verschraubbar ist. Im Gabelarm 3 ist eine weitere Ringschulter 32 angebracht, in die der Befestignugsflansch 31 geringfügig eintauchen kann. Auch hierdurch wird eine Montageposition vorgegeben.

Anhand der Figuren ist ohne weiteres erkennbar, dass die Statoreinheit 21 leicht durch lösen der in den Bohrungen 33 eingesetzten Befestigungsschrauben vom Gabelarm 3 lösbar und sodann in Richtung der Achse D2 vom Gabelarm 3 abnehmbar ist. In umgekehrter Richtung kann die Statoreinheit 21 ebenso leicht aufgesetzt und befestigt, d.h. beispielsweise verschraubt werden. Die Handhabung der Statoreinheit 2 an der Gabel 1 ist somit denkbar einfach.

Darüber hinaus ist, wie in Figur 2 erkennbar, die Statoreinheit 21 sowohl umfangsseitig als auch stirnseitig an nahezu beliebiger Stelle von außen her zugänglich, so dass die entsprechenden Anschlüsse nahezu frei positionierbar angebracht werden können. Die erhöht auch die konstruktive Freiheit bei der Anordnung zusätzlicher Komponenten, beispielsweise Sensoren oder dergleichen innerhalb des Statorgehäuses 22.

Auch die Montage des Rotors 30 ist durch die erfindungsgemäße Bauweise deutlich erleichtert. Der gesamte Rotor 30 ist bei abgenommener Statoreinheit 21 ebenfalls umfangsseitig und stirnseitig komplett von außen her zugänglich. Auch dieser Umstand erleichtert die Montage bzw. Demontage eines erfindungsgemäßen Mehrachsendrehkopfs enorm.

Zur Winkelarretierung des Statorgehäuses 22 können darüber hinaus noch entsprechende Fixierelemente, beispielsweise Passstifte oder dergleichen zusätzlich zu den Verbindungselementen wie den verbindungsschrauben vorgesehen werden.

In Figur 2 ist erkennbar, dass die Gabel 1 spiegelbildlich aufgebaut ist, d.h. am Gabelarm 4 zeigt sich der gleiche Aufbau, wie am Gabelarm 3. Hierdurch ergibt sich eine ebenso symmetrische Kraftverteilung bei Betrieb des erfindungsgemäßen Mehrachsendrehkopfs.

Das oben angeführte Klemm- oder Spannelement zur mechanischen Verspannung der Motorspindel in der Gabel 1 kann an beliebiger Stelle zwischen dem Rotorträger 8 bzw. dem Rotorring 18 und dem Gabelarm 3 angeordnet werden, in Frage kommt beispielsweise der in der Darstellung gemäß Figur 2 erkennbare Hohlraum 34 zwischen dem Rotorträger 8 und dem Gabelarm 3.

### Bezugszeichenliste:

- 1: Gabel
- 2: Quersteg
- 3: Gabelarm
- 4: Gabelarm
- 5: Muffe
- 6: Motorspindel
- 7: Spindelaufnahme
- 8: Rotorträger
- 9: Durchlass
- 10: Durchlass
- 11.: Abstufung
- 12: Abstufung
- 13: Abstufung
- 14: Abstufung
- 15: Abstufung
- 16: Lager
- 17: Bohrung
- 18: Rotorring
- 19: Permanentmagnet
- 20: Bohrung
- 21: Statoreinheit
- 22: Statorgehäuse
- 23: Statorblechpaket
- 24: Magnetspule
- 25: Abdeckflansch
- 26: Kühlkanal
- 27: Blechmantel
- 28: Ringschulter
- 29: Ringanschlag
- 30: Rotor
- 31: Befestigungsflansch
- 32: Ringschulter
- 33: Bohrung
- 34: Hohlraum

## Patentansprüche

1. Mehrachsendrehkopf für eine Werkzeugmaschine mit einer Gabel (1), die drehbar um eine erste Achse angeordnet ist und zwei Gabelarme (3, 4) aufweist, zwischen denen eine Motorspindel (6) drehbar um eine zweite Achse (D2) angeordnet ist, wobei wenigstens ein Motor für den Drehantrieb der Motorspindel (6) in der Gabel (1) vorgesehen ist, **dadurch gekennzeichnet, dass** wenigstens eine seitlich auf einen Gabelarm (3, 4) montierbare Statoreinheit (21) vorgesehen ist und wobei in einem Durchlass (10) des Gabelarms (3, 4) ein Lager (16) eines die Rotorwelle bildenden Rotorträgers (8) des Motors für den Drehantrieb der Motorspindel (6) vorgesehen ist und die Statoreinheit (21) in einer außenliegenden Anordnung seitlich auf den jeweiligen Gabelarm (3, 4) aufgesetzt ist.

2. Mehrachsendrehkopf nach Anspruch 1, **dadurch gekennzeichnet, dass** die Statoreinheit (21) ein vom Gabelarm (3) separates Gehäuse (22) aufweist.

3. Mehrachsendrehkopf nach Anspruch 1, **dadurch gekennzeichnet, dass** das Gehäuse wenigstens eine Durchführung für wenigstens einen Anschluss einer elektrischen Leitung und/oder einer Leitung für ein Betriebsmittel umfasst.

4. Mehrachsendrehkopf nach einem der vorgenannten Ansprüche **dadurch gekennzeichnet, dass** die Statoreinheit (21) wenigstens ein Kühlelement (26) umfasst.

5. Mehrachsendrehkopf nach Anspruch 4, **dadurch gekennzeichnet, dass** ein umfangseitiger Blechmantel (27) für die Kühlung vorgesehen ist.

6. Mehrachsendrehkopf nach Anspruch 5, **dadurch gekennzeichnet, dass** der Blechmantel außennuten im Statorgehäuse abdeckt.

7. Mehrachsendrehkopf nach einem der vorgenannten Ansprüche **dadurch gekennzeichnet, dass** das Betriebsmedium ein Kühlmedium ist.

8. Mehrachsendrehkopf nach einem der vorgenannten Ansprüche **dadurch gekennzeichnet, dass** die Statoreinheit (21) Mittel zur zentrischen Fixierung im Bezug zur zweiten Achse (D2) umfasst.

9. Mehrachsendrehkopf nach Anpruch 8 **dadurch gekennzeichnet, dass** die Fixierungsmittel einen Verbindungsflansch umfassen.

10. Mehrachsendrehkopf nach einem der vorgenannten Ansprüche **dadurch gekennzeichnet, dass** der Gabelarm einen Durchlass (10) für die Rotorachse umfasst.

11. Mehrachsendrehkopf nach einem der vorgenannten Ansprüche **dadurch gekennzeichnet, dass** der Durchlass (10) eine oder mehrere Abstufungen aufweist.

12. Mehrachsendrehkopf nach einem der vorgenannten Ansprüche, **dadurch gekennzeichnet, dass** ein Rotorlager (16) an eine Abstufung des Durchlasses (10) angefügt ist.

13. Mehrachsendrehkopf nach einem der vorgenannten Ansprüche, **dadurch gekennzeichnet, dass** an beiden Gabelarmen (3,4) jeweils eine seitlich montierbare Statoreinheit (21) vorgesehen ist.

## Claims

1. Multiaxis pivot head for a machine tool comprising a fork (1), which is arranged to be pivotable about a first axis, and two fork arms (3, 4), between which a motor spindle (6) is arranged pivotably about a second axis (D2), wherein at least one motor is provided for the rotary drive of the motor spindle (6) in the fork (1), **characterised in that** at least one stator unit (21) which can be mounted laterally on a fork arm (3, 4) is provided and wherein in an opening (10) of the fork arm (3, 4) a bearing (16) of a rotor support (8) of the motor forming the rotor shaft is provided for the rotary drive of the motor spindle (6) and the stator unit (21) is placed laterally on the respective fork arm (3, 4) in an external arrangement.

2. Multiaxis pivot head according to claim 1, **characterised in that** the stator unit (21) comprises a housing (22) that is separate from the fork arm (3).

3. Multiaxis pivot head according to claim 1, **characterised in that** the housing comprises at least one throughput for at least one connection of an electric line and/or a line for an operating means.

4. Multiaxis pivot head according to one of the preceding claims, **characterised in that** the stator unit (21) comprises at least one cooling element (26).

5. Multiaxis pivot head according to claim 4, **characterised in that** a peripheral side metal casing (27) is provided for the cooling.

6. Multiaxis pivot head according to claim 5, **characterised in that** the metal casing covers external grooves in the stator housing.

7. Multiaxis pivot head according to one of the preceding claims, **characterised in that** the operating medium is a cooling medium.

8. Multiaxis pivot head according to one of the preceding claims, **characterised in that** the stator unit (21) comprises means for securing centrally in relation to the second axis (D2).

9. Multiaxis pivot head according to claim 8, **characterised in that** the securing means comprises a connecting flange.

10. Multiaxis pivot head according to one of the preceding claims, **characterised in that** the fork arm comprises an opening (10) for the rotary axis.

11. Multiaxis pivot head according to one of the preceding claims, **characterised in that** the opening (10) comprises one or more graduations.

12. Multiaxis pivot head according to one of the preceding claims, **characterised in that** a rotary bearing (16) is joined onto a graduation of the opening (10).

13. Multiaxis pivot head according to one of the preceding claims, **characterised in that** on both fork arms (3, 4) respectively a laterally mountable stator unit (21) is provided.

## Revendications

1. Tête rotative à axes multiples pour une machine-outil comportant une fourche (1), laquelle est agencée de manière à pouvoir tourner autour d'un premier axe (D1) et présente deux bras de fourche (3, 4) entre lesquels est agencée une broche motorisée (6) de manière à pouvoir tourner autour d'un second axe (D2), au moins un moteur étant prévu pour l'entraînement en rotation de la broche motorisée (6) dans la fourche (1),
**caractérisée en ce que**
- au moins une unité de stator (21) est prévue pour être montée latéralement sur un bras de fourche (3, 4),
- un passage (10) du bras de fourche (3, 4), comporte un palier (16) d'un support de rotor (8) du moteur formant l'arbre de rotor pour l'entraînement en rotation de la broche motorisée (6), et
- l'unité de stator (21) est rapportée dans un montage extérieur, latéral, sur le bras de fourche (3, 4) respectif.

2. Tête rotative à axes multiples selon la revendication 1,
**caractérisée en ce que**
l'unité de stator (21) présente un boîtier (22) séparé du bras de fourche (3).

3. Tête rotative à axes multiples selon la revendication 1,
**caractérisée en ce que**
le boîtier comprend au moins un passage pour au moins un raccordement d'une liaison électrique et/ou d'une conduite pour un fluide d'actionnement.

4. Tête rotative à axes multiples selon l'une des revendications précédentes,
**caractérisée en ce que**
l'unité de stator (21) comporte au moins un élément de refroidissement (26).

5. Tête rotative à axes multiples selon la revendication 4,
**caractérisée en ce qu'**
il est prévu une enveloppe en tôle (27) périphérique latérale pour le refroidissement.

6. Tête rotative à axes multiples selon la revendication 5,
**caractérisée en ce que**
l'enveloppe en tôle recouvre des rainures extérieures ménagées dans le boîtier de stator.

7. Tête rotative à axes multiples selon l'une des revendications précédentes,
**caractérisée en ce que**
le fluide d'actionnement est un fluide de refroidissement.

8. Tête rotative à axes multiples selon l'une des revendications précédentes,
**caractérisée en ce que**
l'unité de stator (21) comprend des moyens destinés à la fixation centrée par rapport au second axe (D2).

9. Tête rotative à axes multiples selon la revendication 8,
**caractérisée en ce que**
les moyens de fixation comprennent une bride d'assemblage.

10. Tête rotative à axes multiples selon l'une des revendications précédentes,
**caractérisée en ce que**
le bras de fourche comporte un passage (10) pour l'axe de rotor.

11. Tête rotative à axes multiples selon l'une des revendications précédentes,
**caractérisée en ce que**
le passage (10) présente un ou plusieurs gradins.

12. Tête rotative à axes multiples selon l'une des revendications précédentes,
**caractérisée en ce qu'**
un palier de rotor (16) est accolé à un gradin du passage (10).

13. Tête rotative à axes multiples selon l'une des revendications précédentes,
**caractérisée en ce qu'**
il est prévu sur chacun des deux bras de fourche (3, 4) une unité de stator (21) pouvant être montée latéralement.
